(19) Europäisches Patentamt
European Patent Office
Office européen des brevets

(11) Veröffentlichungsnummer: **0 124 797**
**B1**

(12) # EUROPÄISCHE PATENTSCHRIFT

(45) Veröffentlichungstag der Patentschrift: **04.06.86**

(51) Int. Cl.4: **C 09 B 62/51**, D 06 P 3/66, D 06 P 3/10, C 09 B 67/26

(21) Anmeldenummer: **84104102.3**

(22) Anmeldetag: **12.04.84**

(54) **Wasserlösliche Monoazoverbindungen, Verfahren zu ihrer Herstellung und ihre Verwendung.**

(30) Priorität: **18.04.83 US 485682**

(43) Veröffentlichungstag der Anmeldung: **14.11.84 Patentblatt 84/46**

(45) Bekanntmachung des Hinweises auf die Patenterteilung: **04.06.86 Patentblatt 86/23**

(84) Benannte Vertragsstaaten: **CH DE FR GB IT LI**

(56) Entgegenhaltungen:
**DE - A - 1 943 904**
**FR - A - 2 098 350**

(73) Patentinhaber: **AMERICAN HOECHST CORPORATION, Route 202-206 North, Somerville, N.J. 08876 (US)**

(72) Erfinder: **Corso, Anthony J., Crocus Court 5 Coventry, Rhode Island 02816 (US)**
Erfinder: **Meininger, Fritz, Dr., Loreleistrasse 7, D-6230 Frankfurt am Main 80 (DE)**
Erfinder: **Phillips, Thomas S., Fifth Street 9 E. Greenwich, Rhode Island 02818 (US)**

(74) Vertreter: **Becker, Heinrich Karl Engelbert, Dr. et al, HOECHST AKTIENGESELLSCHAFT Central Patent Department P.O. Box 80 03 20, D-6230 Frankfurt am Main 80 (DE)**

EP 0 124 797 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung liegt auf dem technischen Gebiet der faserreaktiven Azofarbstoffe.

Im Beispiel 7 der deutschen Patentschrift 1943904 ist ein Azofarbstoff beschrieben, der aus der 2-Amino-8-(β-phosphatoäthylsulfonyl)-naphthalin-6-sulfonsäure als Diazokomponente und der 1-Hydroxy-8-benzoylamino-naphthalin-3,6-disulfonsäure als Kupplungskomponente aufgebaut ist. Die mit diesem Farbstoff hergestellten Baumwollfärbungen besitzen zwar gute Licht- und Waschechtheiten, zeigen jedoch Mängel in der Chlorbleich- und der Chlorbadewasserechtheit.

Es wurden nunmehr neue, wertvolle Azofarbstoffe mit verbesserten Eigenschaften gefunden, die der allgemeinen Formel (1)

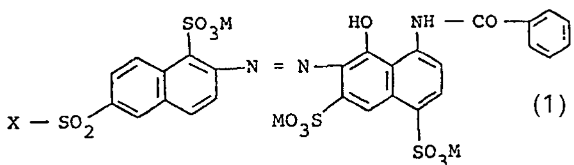

(1)

entsprechen, in welcher

M ein Wasserstoffatom oder ein Alkalimetallatom oder das Äquivalent eines Metalls der 2. oder 3. Hauptgruppe darstellt, insbesondere das Äquivalent des Calciums ist, bevorzugt jedoch ein Wasserstoffatom, Natrium, Kalium oder Lithium darstellt, und

X für die Vinylgruppe steht oder für eine Gruppe der allgemeinen Formel (2)

$$-CH_2-CH_2-Z \qquad (2)$$

in welcher

Z eine alkalisch eliminierbare Gruppe bedeutet.

Eine durch ein Alkali unter Mitnahme eines Wasserstoffatomes aus der Gruppe der Formel (2) unter Bildung der Vinylgruppe eliminierbare Gruppe Z ist beispielsweise das Chloratom, das Bromatom, eine Dialkylaminogruppe mit Alkylresten von 1 bis 4 C-Atomen, wie die Dimethylamino- und die Diäthylaminogruppe, eine Alkanoyloxygruppe von 2 bis 5 C-Atomen, wie die Acetyloxy- und die Propionyloxygruppe, die Hydroxygruppe, eine Phosphatogruppe (entsprechend der allgemeinen Formel $-OPO_3M_2$ mit M der obengenannten Bedeutung), eine Thiosulfatogruppe (entsprechend der allgemeinen Formel $-S-SO_3M$ mit M der obengenannten Bedeutung) und bevorzugt eine Sulfatogruppe (entsprechend der allgemeinen Formel $-OSO_3M$ mit M der obengenannten Bedeutung).

Die Verbindungen der allgemeinen Formel (1), in welchen X für die Vinylgruppe oder eine β-Sulfatoäthylgruppe steht, sind bevorzugte Ausgestaltungen der Erfindung.

Wie durch die Definition der allgemeinen Formel (1) schon angegeben, können die erfindungsgemässen Azoverbindungen sowohl in Form der freien Säure als auch in Form ihrer Salze vorliegen. Bevorzugt sind sie in Form der Alkalimetallsalze; sie finden bevorzugt in Form dieser Salze ihre Verwendung zum Färben und Bedrucken von hydroxy- und/oder carbonamidgruppenhaltigem Material, bevorzugt Fasermaterial.

Die vorliegende Erfindung betrifft weiterhin ein Verfahren zur Herstellung dieser Azoverbindungen der allgemeinen Formel (1), das dadurch gekennzeichnet ist, dass man eine Verbindung der allgemeinen Formel (3)

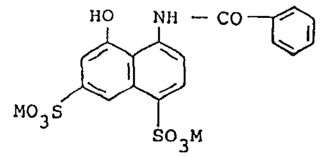

(3)

in welcher M die obengenannte Bedeutung besitzt, in an und für sich üblicher Verfahrensweise mit einer diazotierten Aminoverbindung der allgemeinen Formel (4)

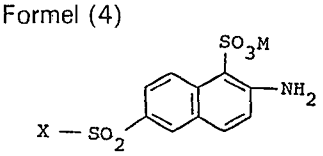

(4)

in welcher X die obengenannte Bedeutung besitzt, kuppelt.

Sofern in der Verbindung (4) der Formelrest X für die β-Hydroxyäthyl-Gruppe steht, kann die erfindungsgemässe Azoverbindung (1) mit X gleich der β-Hydroxyäthyl-Gruppe in erfindungsgemässer Weise mit einem Veresterungs- oder Acylierungsmittel, wie einem Sulfatierungs-, Phosphatierungs- oder Acetylierungsmittel, so beispielsweise mittels konzentrierter Schwefelsäure oder Schwefeltrioxid enthaltender Schwefelsäure, Chlorsulfonsäure, Phosphorsäure oder Eisessig, in die entsprechende Esterverbindung, in welcher Z für eine Estergruppe steht, so beispielsweise die Sulfato-, Phosphato- oder Acetyloxygruppe, übergeführt werden. Solche Verfahrensweisen, insbesondere der Sulfatierung und Phosphatierung, sind zahlreich in der Literatur beschrieben.

Die erfindungsgemässe Kupplungsreaktion wird unter den üblichen Bedingungen der Herstellung von faserreaktiven Azoverbindungen durchgeführt, so bevorzugt in wässerigem Medium und beispielsweise bei einer Temperatur zwischen 0 und 30°C, bevorzugt zwischen 5 und 15°C, und beispielsweise bei einem pH-Wert zwischen 4 und 8, bevorzugt zwischen 4 und 7.

Die erfindungsgemässen Verbindungen lassen sich aus ihren Syntheselösungen nach allgemein bekannten Methoden für wasserlösliche Verbindungen isolieren, so beispielsweise durch Ausfällen aus dem Reaktionsmedium mittels eines Elektrolyten, wei beispielsweise Natriumchlorid oder Kaliumchlorid, oder aber durch Eindampfen der Reaktionslösung selbst, beispielsweise durch Sprühtrocknung. Falls die letztgenannte Art der Isolierung der erfindungsgemässen Verbindungen gewählt wird, empfiehlt es sich, vor dem Eindampfen eventuell in den Lösungen verhandene Sulfatmengen durch Fällung als Calciumsulfat und Abtrennung durch Filtration zu entfernen. In manchen Fällen kann die wässerige Lösung der erfindungsgemässen Verbindung, gegebenenfalls nach Zusatz einer Puffersubstanz, auch direkt als

Flüssigpräparation der Verwendung, beispielsweise zum Färben oder Bedrucken eines Fasermaterials, zugeführt werden.

Die vorliegende Erfindung betrifft somit auch wässerigen Präparationen einer Verbindung der allgemeinen Formel (1), die 5 bis 45 Gew.-%, vorzugsweise 10 bis 20 Gew.-%, der wasserlöslichen erfindungsgemässen Azoverbindung enthalten, des weiteren gegebenenfalls Elektrolyte, wie Natriumchlorid, Kaliumchlorid, Lithiumchlorid oder deren Sulfate, die aus dem Reaktionsansatz stammen oder bei Isolierung der erfindungsgemässen Verbindung zugefügt wurden, bevorzugt in einer Menge von höchstens 10 Gew.-%, insbesondere höchstens 6 Gew.-%, und die gegebenenfalls bis zu 5 Gew.-% an einer Puffersubstanz, oder einem Gemisch derselben, vorzugsweise bis zu 1,5% an einer Puffersubstanz, wie Natriumdihydrogenphosphat, Dinatriumhydrogenphosphat, Natriumacetat, Natriumborat und Natriumhydrogencarbonat oder diese Verbindungen in entsprechendem Puffergemisch mit deren Säuren, enthalten. Bevorzugt sind auch wässerige Färbepräparationen mit dem angegebenen Gehalt an der Verbindung der allgemeinen Formel (1), die gegebenenfalls die angegebenen Elektrolyte, jedoch keine Puffersubstanz enthalten und einen pH-Wert zwischen 2,5 und 4,5 besitzen; insbesondere diese Präparationen mit einem pH-Wert zwischen 2,5 und 4,5 besitzen eine sehr gute Lagerbeständigkeit und Beständigkeit gegen Hydrolyse.

Die erfindungsgemässen Verbindungen besitzen wertvolle Farbstoffeigenschaften. Sie eignen sich als wasserlösliche Farbstoffe zum Färben von Leder oder hydroxy- oder carbonamidgruppenhaltigen Materialien, insbesondere von Materialien aus natürlichen, regenerierten oder synthetischen stickstoffhaltigen Fasern oder aus natürlichen, regenerierten oder synthetischen hydroxygruppenhaltigen Fasern, und vermögen diese Materialien in tiefen, brillant roten Tönen mit sehr guten Echtheiten zu färben. Der faserreaktive Rest in den erfindungsgemässen Verbindungen besitzt die Eigenschaft, mit NH- und OH-Gruppen, – mit den Hydroxygruppen vorzugsweise im alkalischen Bereich, – eine kovalente Bindung einzugehen und somit eine echte Bindung mit der Faser zu erzeugen.

Die vorliegende Erfindung betrifft somit ebenfalls die Verwendung der erfindungsgemässen Verbindungen zum Färben (einschliesslich Bedrucken) von solchen Materialien oder von Leder bzw. ein Verfahren zum Färben (einschliesslich Bedrucken) von solchen Materialien (Substraten), bei welchem man eine erfindungsgemässe Verbindung, vorzugsweise aus wässeriger Lösung, auf das Substrat appliziert und sie, gegebenenfalls unter der Einwirkung eines Alkalis und von Wärme, auf dem Substrat fixiert.

Stickstoffhaltige Materialien sind z. B. synthetische Polyurethane und Polyamide, wie Polyamid-6,6, Polyamid-6, Polyamid-11 und Polyamid-4, bevorzugt in Form ihrer Fasern; natürliche Fasermaterialien aus Polyamiden sind Seide und Wolle und andere Tierhaare.

Hydroxygruppenhaltige Materialien sind bspw. Polyvinylalkohole, insbesondere Cellulosefasermaterialien, vorzugsweise Baumwolle und andere Pflanzenfasern, wie Leinen, Hanf, Jute, des weiteren deren Regeneratprodukte, wie insbesondere Fasern aus regenerierter Cellulose, wie beispielsweise Viskose oder Kupferseide.

Die erfindungsgemässen Verbindungen lassen sich auf den genannten Substraten nach den für faserreaktive Farbstoffe allgemein bekannten Anwendungstechniken applizieren. So geht man allgemein in der Weise vor, dass man die erfindungsgemässen Verbindungen in wässeriger Lösung, gegebenenfalls in Anwesenheit eines üblichen Verdickungsmittels und/oder gegebenenfalls anderer Hilfsmittel, die beispielsweise das Aufziehvermögen, das Egalisiervermögen und Migriervermögen verbessern können, auf das Substrat aufbringt, wobei die wässerige Lösung der erfindungsgemässen Verbindung schwach sauer, neutral oder alkalisch eingestellt sein kann.

Auf natürlichen, regenerierten oder synthetischen Polyamidfasern oder Polyurethanfasern oder auf Leder werden die erfindungsgemässen Verbindungen in üblicher Weise aus einer wässerig schwach sauren bis wässerig neutralen Lösung (pH-Bereich etwa zwischen 3 und 6,5), vorzugsweise gemäss den Methoden des Ausziehverfahrens, auf die Faser aufgebracht und dort in der Wärme, insbesondere bei einer Temperatur zwischen 60 und 130°C, fixiert.

So kann man beispielsweise dem die erfindungsgemässe Verbindung enthaltenden Bad Essigsäure oder Essigsäure und Ammoniumacetat als Puffer zufügen, um den gewünschten pH-Wert zu erhalten. Zwecks Erreichung einer brauchbaren Egalität der Färbungen empfiehlt sich ein Zusatz an üblichen Egalisierhilfsmitteln, beispielsweise auf Basis eines Umsetzungsproduktes von Cyanurchlorid mit der dreifach molaren Menge einer Aminobenzolsulfonsäure und/oder einer Aminonaphthalinsulfonsäure oder auf Basis eines Umsetzungsproduktes von Stearylamin mit Äthylenoxid. Die Applikation und Fixierung der erfindungsgemässen Verbindung auf dem Substrat kann gemäss dem Ausziehverfahren sowohl bei Siedetemperatur als auch bei einer höheren Temperatur, wie beispielsweise bei 105 bis 120°C, unter Druck ausgeführt werden, wobei man die Färbung zweckmässig unter langsamer Temperatursteigerung auf 60°C, nach einiger Zeit unter langsamer Temperatursteigerung auf höhere Temperatur, beginnt.

Beim Färben von hydroxygruppenhaltigen Fasermaterialien wird die erfindungsgemässe Verbindung in der Regel aus neutraler bis alkalischer Lösung auf die Faser aufgebracht und auf ihr in Gegenwart eines alkalischen Mittels, das erforderlichenfalls nachträglich der wässerigen Lösung zugesetzt oder auf die Faser aufgebracht wird, fixiert.

Man erhält auf diese Weise gefärbte (bzw. bedruckte) Fasermaterialien, die gute Nassechtheitseigenschaften besitzen.

Im einzelnen kann man gemäss üblichen Methoden der Aufbringung von faserreaktiven Farbstoffen und deren Fixierung auf der Faser, die zahlreich in der Literatur beschrieben sind, vorgehen, beispielsweise folgendermassen:

Zum Färben von hydroxygruppenhaltigen Fasermaterialien, wie beispielsweise Cellulose, wird das Material mit einer Lösung der erfindungsgemässen Verbindung geklotzt und eventuell nach Zwischentrocknen des geklotzten Materials mit einer alkalischen Lösung überklotzt oder durch ein alkalisches Bad geführt; diese alkalischen Lösungen können Raumtemperatur oder höhere Temperatur besitzen, beispielsweise eine Temperatur zwischen 15 und 80°C.

Alkalisch reagierende Stoffe, die in diesen Fixierlösungen verwendet werden können, sind beispielsweise Natriumhydroxid, Natriumcarbonat, Natriumhydrogencarbonat, Kaliumhydroxid, Kaliumcarbonat, Dinatriumhydrogenphosphat, Trinatriumphosphat oder Natrium- oder Kaliumsilikat (Wasserglas). Die so alkalisch behandelte Ware wird anschliessend entweder bei einer Temperatur zwischen 20 und 50°C abgelegt (beispielsweise abgetafelt oder auf eine Docke gewickelt) und dort mehrere Stunden lang zur Fixierung der erfindungsgemässen Verbindung verweilen lassen, oder anschliessend zur Fixierung der erfindungsgemässen Verbindung der Einwirkung von feuchter oder trockener Hitze (so beispielsweise mittels Heissdampf, Heissluft oder Infrarotstrahlung) ausgesetzt. Im Falle der thermischen Fixierung können als Alkalien auch Verbindungen eingesetzt werden, die erst in der Wärme ihre alkalische Wirkung erzielen, wie beispielsweise Natriumacetat, Natriumformiat und Natriumtrichloracetat.

Die alkalischen Mittel können aber auch bereits der wässerigen Farbstofflösung zugegeben werden. In diesem Falle behandelt man das Fasermaterial in der wässerig-alkalischen Lösung, die die erfindungsgemässe Verbindung enthält, vorteilhaft unter Zusatz eines Elektrolyts, wie Natriumchlorid oder Natriumsulfat, bei höheren Temperaturen, wie beispielsweise bei einer Temperatur zwischen 30 und 110°C, wobei man vorteilhaft unter langsamer Temperatursteigerung des Ausziehbades auf 60°C mit der Behandlung der Faser beginnt und die Fixierung anschliessend bei dieser Temperatur weiterführt und beendet. Ebenfalls ist es möglich, die Faser, wie z. B. die Cellulosefaser, mit einer Lösung einer alkalisch reagierenden Verbindung vorzubehandeln, sodann, gegebenenfalls nach Zwischentrocknung, mit der wässerigen Lösung der erfindungsgemässen Verbindung zu imprägnieren und anschliessend bei Raumtemperatur, vorzugsweise aber unter Wärmebehandlung, die faserreaktive erfindungsgemässe Verbindung darauf zu fixieren.

Bringt man die erfindungsgemässen Verbindungen in Form von Druckpasten auf das Fasermaterial, so verwendet man üblicherweise Verdickungsmittel, wie Natriumalginat, Johannisbrotkernmehläther, Celluloseäther, Traganth oder Gummi Arabicum, gegebenenfalls unter Zusatz eines üblichen Druckhilfsmittels und der obengenannten alkalisch reagierenden Verbindungen. Diese Drucke werden dann bei einer Temperatur zwischen 100 und 230°C, vorzugsweise zwischen 100 und 150°C, mit Heissluft behandelt (thermofixiert) oder gedämpft. Hierbei kann man die üblichen Druckverfahren anwenden, die beispielsweise einphasig oder zweiphasig durchgeführt werden können. Bei der einphasigen Verfahrensweise wird beispielsweise die Cellulosefaser mittels einer die erfindungsgemässe Verbindung und Natriumbicarbonat oder ein anderes der obengenannten alkalischen Mittel enthaltenden Druckpaste bedruckt und die erfindungsgemässe Verbindung anschliessend durch Dämpfen bei 101 bis 103°C fixiert; nach einem zweiphasigen Verfahren kann die erfindungsgemässe Verbindung zuerst mittels einer neutralen oder schwach sauren, die erfindungsgemässe Verbindung enthaltenden Druckpaste auf die Faser gebracht werden, worauf die erfindungsgemässe Verbindung entweder durch Hindurchführen des bedruckten Materials durch ein heisses elektrolythaltiges alkalisches Bad oder aber durch Überklotzen mit einer alkalischen elektrolythaltigen Flotte bei anschliessendem Verweilenlassen oder einer Hitzebehandlung, wie durch Heissdampf oder Heissluft, auf der Faser fixiert werden. Verwendet man ein elektrolythaltiges alkalisches Bad, durch das das mit der erfindungsgemässen Verbindung imprägnierte Material zur Fixierung hindurchgeführt wird, so wendet man eine Temperatur von 60 bis 105°C für das Bad an, so dass eine anschliessende Behandlung durch Heissluft oder Dampf entfallen kann. Behandelt man das mit der erfindungsgemässen Verbindung imprägnierte Material mit einem stark wässerigen Alkali, wie z. B. Natrium- oder Kaliumhydroxid oder Natrium- oder Kaliumsilikat oder Trinatriumphosphat, so genügt zur Fixierung der erfindungsgemässen Verbindung ein längeres Verweilenlassen der feuchten, alkalisch imprägnierten Ware, vorzugsweise der Drucke, bei Raumtemperatur.

Die so erhaltenen gefärbten Materialien werden anschliessend in übliche Weise nachbehandelt, gespült und getrocknet. Die auf diese Weise mit den erfindungsgemässen Verbindungen erhaltenen brillant roten Färbungen bzw. Drucke zeigen vorzügliche Nassechtheiten; von diesen sind insbesondere beispielsweise die Waschechtheit bei 60 und 95°C, die alkalische und saure Schweissechtheit, die Wasserechtheit (schwer), die Chlorbleichechtheit und Chlorbadewasserechtheit zu nennen. Insbesondere die Lichtechtheit der mit den erfindungsgemässen Verbindungen hergestellten Färbungen ist in trockenem und feuchtem Zustand des Substrates bemerkenswert gut. Die gute Lichtechtheit wird auch bei Kunstharzausrüstung der Färbungen auf Cellulosefasern beibehalten; eine Abtrübung der Nuance zeigt sich nicht. Die mit den erfindungsgemässen Farbstoffen erhaltenen Drucke zeigen darüber hinaus eine hohe Konturenschärfe und eine sehr hohe Reinheit des Weissfonds. Sie besitzen ein sehr gutes Aufzieh- und Aufbauvermögen und einen hohen Fixiergrad (hohe Farbstärke). Sie fixieren auf den unterschiedlichen Fasermaterialien eines Baumwoll/Zellwolle-Mischgewebes in gleicher

Intensität; so zeigen sie auf diesen Fasermaterialien gleiche Nuance und Farbstärke.

Die nachfolgenden Beispiele dienen zur Erläuterung der Erfindung. Die dort angegebenen Teile sind Gewichtsteile, die Angaben in Prozent beziehen sich auf Gewichtsprozent, sofern nichts anderes vermerkt. Volumenteile verhalten sich zu Gewichtsteilen wie Liter zu Kilogramm.

*Beispiel 1*

361,5 Teile 2-Amino-6-(β-sulfatoäthylsulfonyl)-naphthalin-1-sulfonsäure, hergestellt durch Sulfierung und gleichzeitige Veresterung von 2-Amino-6-(β-hydroxyäthylsulfonyl)-naphthalin, werden unter Rühren in eine Mischung aus 1000 Teilen Wasser und 500 Teilen Eis eingetragen und mit 152 Teilen einer wässerigen 40%igen Natriumnitritlösung diazotiert. Überschüssiges Nitrit wird anschliessend mit etwa einem Teil Amidosulfonsäure zerstört. Die Suspension des Diazoniumsalzes wird sodann durch Einstreuen von Natriumcarbonat auf einen pH-Wert von 1,0 bis 1,5 abgestumpft und anschliessend mit 381 Teilen 1-Benzoylamino-8-naphthol-4,6-disulfonsäure (in Form des Natriumsalzes) versetzt. Zur Kupplung wird danach ein pH-Wert von 6,0 bis 6,5 durch Einstreuen von 200 Teilen Natriumcarbonat eingestellt und gehalten. Nach Beendigung der Kupplungsreaktion wird die erhaltene Syntheselösung bei 40° C filtriert und die erfindungsgemässe Monoazoverbindung durch Zugabe von Kaliumchlorid ausgefällt. Das Produkt wird durch Filtration isoliert und bei 70° bis 80° C im Vakuumtrockenschrank getrocknet. Man erhält ein salzhaltiges dunkelrotes Pulver der erfindungsgemässen Verbindung der Formel

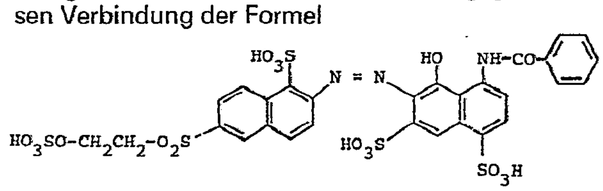

in Form ihres Kaliumsalzes. In wässeriger Lösung zeigt die neue Verbindung ein Absorptionsmaximum bei 508 nm.

In analoger Weise können auch die Natriumsalze und Lithiumsalze oder Mischungen der Alkalimetallsalze dieser Verbindung hergestellt werden.

Diese efindungsgemässen Verbindungen zeigen sehr gute faserreaktive Eigenschaften und liefern auf den in der Beschreibung genannten Materialien, insbesondere Fasermaterialien, wie vorzugsweise Baumwolle, nach den in der Technik allgemein bekannten und üblichen Applikations- und Fixiermethoden für faserreaktive Farbstoffe farbstarke Färbungen und Drucke mit brillantroter Nuance und mit sehr guten Echtheitseigenschaften, von denen die Waschechtheiten bei 60° C und 95° C, die alkalischen und sauren Schweissechtheiten, die Chlorbleichechtheit und Chlorbadewasserechtheit sowie die Lichtheiten in feuchtem und trockenem Zustand der Ware hervorgehoben werden können.

*Beispiele 2 bis 6*

In den nachfolgenden Tabellenbeispielen sind weitere erfindungsgemässe Monoazoverbindungen in Form der freien Säuren beschrieben. Vorzugsweise liegen sie in Form ihrer Alkalimetallsalze, wie Natrium-, Kalium- oder Lithiumsalze, vor. Sie lassen sich in erfindungsgemässer Weise, beispielsweise analog dem Ausführungsbeispiel 1, aus den entsprechenden Ausgangskomponenten (so der 2-Amino-6-vinylsulfonyl-naphthalin-1-sulfonsäure, der 2-Amino-6-(β-chloräthylsulfonyl)-naphthalin-1-sulfonsäure, der 2-amino-6-(β-thiosulfatoäthylsulfonyl)-naphthalin-1-sulfonsäure, der 2-Amino-6-(β-acetoxyäthylsulfonyl)-naphthalin-1-sulfonsäure oder der 2-Amino-6-(β-phosphatoäthylsulfonyl)-naphthalin-1-sulfonsäure als Diazokomponente und der 1-Benzoylamino-8-naphthol-4,6-disulfonsäure als Kupplungskomponente) herstellen. Diese erfindungsgemässen Azoverbindungen besitzen ebenfalls sehr gute faserreaktive Farbstoffeigenschaften mit sehr guten anwendungstechnischen Eigenschaften und liefern Färbungen und Drucke auf den in der Beschreibung genannten Fasermaterialien, insbesondere auf Cellulosefasermaterialien, nach den für faserreaktive Farbstoffe üblichen Applikations- und Fixiermethoden mit hohen Farbstärken in der in dem jeweiligen Tabellenbeispiel angegebenen Nuance auf beispielsweise Baumwolle und mit dem gleichen Niveau der Echtheitseigenschaften wie für die in Beispiel 1 genannte erfindungsgemässe Verbindung beschrieben.

| Bsp. | Azoverbindung entsprechend Formel (1) | Farbton |
|---|---|---|
| 2 | 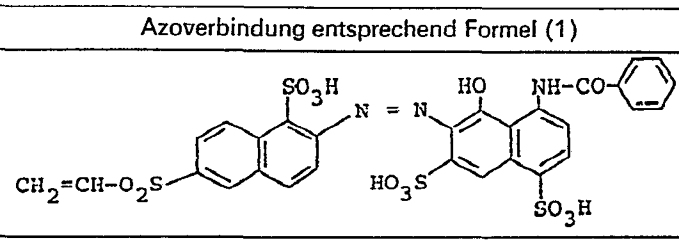 | brillant rot |
| 3 | 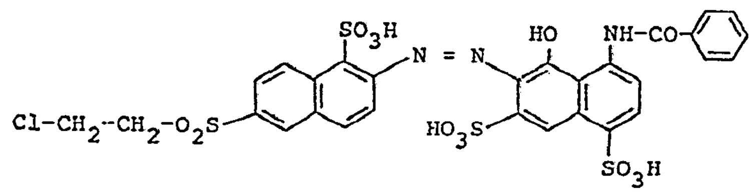 | brillant rot |

| Bsp. | Azoverbindung entsprechend Formel (1) | Farbton |
|---|---|---|
| 4 | 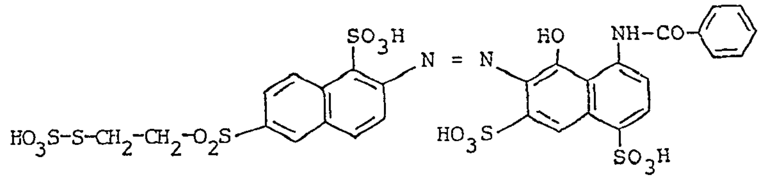 | brillant rot |
| 5 | 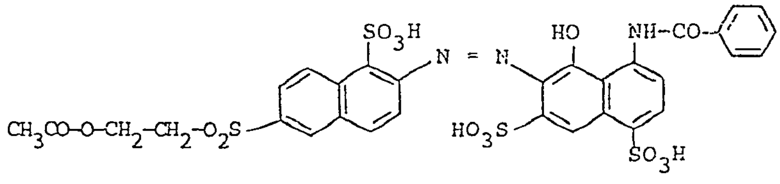 | brillant rot |
| 6 | 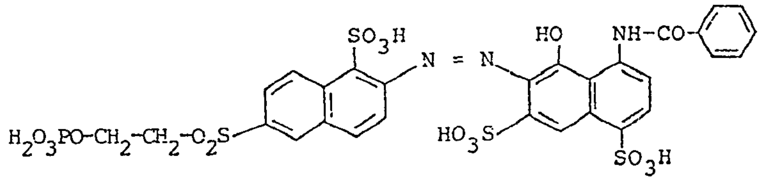 | brilant rot |

*Beispiel 7*

62,8 Teile 2-Aminonaphthalin-6-β-hydroxyäthylsulfon werden in 162 Teilen 100%iger Schwefelsäure gelöst, wobei Überführung der β-Hydroxyäthylsulfon-Gruppe in die β-Sulfatoäthylsulfonyl-Gruppe erfolgt. Diese Verbindung wird anschliessend durch Zugabe von 78 Teilen 65%igem Oleum sulfoniert. Das Produkt wird durch Eingiessen in Eiswasser, bestehend aus 250 Teilen Wasser, 500 Teilen Eis und 62,5 Teilen Natriumchlorid, anschliessende Filtration und Waschen des Filterkuchens mit 250 Teilen einer kalten, 20%igen wässerigen Natriumchloridlösung isoliert. Der Filterkuchen wird danach in 450 Teilen Wasser aufgeschlämmt, 100 Teile Eis werden hinzugegeben und die Naphthylaminoverbindung mit 34,5 Teilen einer wässerigen 40%igen Natriumnitritlösung diazotiert. Überschüssiges Nitrit wird durch Zugabe von 1 Teil Sulfaminsäure zerstört. Sodann gibt man 540 Teile einer wässerigen 16%igen Lösung von 1-Benzoylamino-8-naphthol-4,6-disulfonsäure in Form des Lithiumsalzes hinzu. Der pH-Wert des Reaktionsansatzes wird sodann auf 5,0 bis 5,5 mittels 65 Teilen einer wässerigen 15%igen Natriumcarbonatlösung eingestellt. Nach Beendigung der Kupplung wird die erhaltene Lösung sprühgetrocknet. Es werden 275 Teile eines Farbstoffpulvers, das 5,8% anorganisches Sulfatsalz und 7,6% anorganisches Chloridsalz enthält, erhalten. Dieses Farbstoffpulver wird danach mit 68,7 Teilen wasserfreiem Natriumsulfat vermischt, um ein Farbstoffpulver mit standardisierter Farbstärke zu erhalten.

Die nach der Synthese erhaltene Farbstofflösung kann auch vor der Sprühtrocknung als Flüssigpräparation bspw. in der Weise standardisiert werden, indem man zusätzlich soviel Wasser hinzugibt und weiterhin mit Säure einen pH-Wert zwischen 2,5 und 4,5 einstellt, dass man 1375 Teile einer standardisierten wässerigen Flüssigpräparation des Farbstoffes erhält.

Der nach diesem Beispiel hergestellte erfindungsgemässe β-Sulfatoäthylsulfonyl-Azoverbindung ist mit der des Beispieles 1 identisch und zeigt dieselben guten Eigenschaften, wie für die Verbindung des Beispieles 1 beschrieben.

*Beispiel 8*

Flüssige wässerige Präparationen des erfindungsgemässen β-Sulfatoäthylsulfonyl-Monoazofarbstoffes wurden in der Weise auf ihre Beständigkeit ausgeprüft, dass sie in einem verschlossenen Gefäss bei einem in der nachfolgenden Tabelle angegebenen Anfangs-pH-Wert für mehrere Tage bei einer Temperatur von 40°C aufbewahrt wurden.

Jede wässerige Farbstoffprobe wurde auf ihren Vinylsulfon-Gehalt analysiert, und zwar vor dem Lagerungstest und von Zeit zu Zeit danach. Der ermittelte Nettoanstieg an dem Vinylsulfongehalt der Lösungen bei verschiedenen Lagerungszeiten ist in der Tabelle aufgeführt; wie daraus ersichtlich ist, zeigen die erfindungsgemässen pufferfreien flüssigen Farstoffpräparationen, bei denen der Anfangs-pH-Wert unterhalb 4,5 lag, eine deutlich geringere Vinylsulfon-Bildung während ihrer Lagerung als die entsprechende pufferfreie Präparation mit dem höheren pH-Wert.

| Anfangs-pH-Wert | Vinylsulfon-Bildung (Differenz von Anfangs- zu Endkonzentration in %) | | | | |
|---|---|---|---|---|---|
| | 7 Tage | 14 Tage | 27 Tage | 35 Tage | 56 Tage |
| 5,0 | 7.5% | 10.0% | 12.3% | 14.3% | 16.8% |
| 2,5 | 0% | 0% | 0.1% | 0.2% | 0.8% |
| 3,5 | 0.2% | 0.5% | 1.0% | 1.4% | 3.6% |

**Patentansprüche**

1. Wasserlösliche Monoazoverbindung der allgemeinen Formel (1)

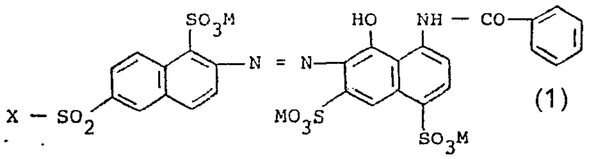

(1)

in welcher M ein Wasserstoffatom oder ein Alkalimetallatom ist oder für ein Äquivalent eines Metalls der 2. oder 3. Hauptgruppe steht und X die Vinylgruppe bedeutet oder eine Gruppe der allgemeinen Formel (2)

$$-CH_2-CH_2-Z \qquad (2)$$

ist, in welcher Z für einen alkalisch abspaltbaren Substituenten steht.

2. Verbindung nach Anspruch 1, dadurch gekennzeichnet, dass X die Vinylgruppe ist.

3. Verbindung nach Anspruch 1, dadurch gekennzeichnet, dass X eine β-Sulfatoäthyl-Gruppe bedeutet.

4. Verbindung nach Anspruch 1, 2 oder 3, dadurch gekennzeichnet, dass M für ein Wasserstoffatom oder für ein Alkalimetallatom steht.

5. Verfahren zur Herstellung der in Anspruch 1 genannten und definierten Verbindungen der allgemeinen Formel (1), dadurch gekennzeichnet, dass man eine Verbindung der allgemeinen Formel (3)

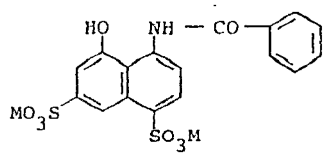

(3)

in welcher M die obengenannte Bedeutung besitzt, mit einer diazotierten Aminoverbindung der allgemeinen Formel (4)

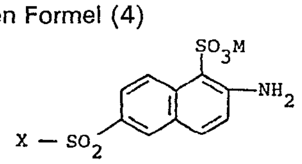

(4)

in welcher M und X die obengenannten Bedeutungen haben, kuppelt.

6. Verfahren zur Herstellung der in Anspruch 1 genannten Verbindungen der allgemeinen Formel (1), in welchen X eine in β-Stellung durch eine Estergruppe substituierte Äthylgruppe ist, dadurch gekennzeichnet, dass man eine Verbindung der in Anspruch 5 genannten und definierten allgemeinen Formel (3) mit einer diazotierten Aminoverbindung der in Anspruch 5 genannten allgemeinen Formel (4), in welcher X jedoch für die β-Hydroxyäthyl-Gruppe steht, kuppelt und anschliessend die so erhaltene Azoverbindung entsprechend der allgemeinen Formel (1), in welcher X jedoch für die β-Hydroxyäthyl-Gruppe steht, mit einem Veresterungs- oder Acylierungsmittel umsetzt.

7. Verwendung der Azoverbindungen von Anspruch 1 oder der nach Anspruch 5 oder 6 hergestellten Azoverbindungen als Farbstoffe.

8. Verwendung nach Anspruch 7 zum Färben von hydroxy- und/oder carbonamidgruppenhaltigen Materialien, insbesondere Fasermaterialien.

9. Verwendung nach Anspruch 8 zum Färben von Cellulosefasermaterialien.

10. Wässerige, flüssige Präparationen, gekennzeichnet durch den Gehalt an 5 bis 45% einer Verbindung von Anspruch 1 und gegebenenfalls bis zu 5 Gew.-% einer Puffersubstanz.

11. Wässerige, flüssige Präparationen von Verbindungen von Anspruch 1, gekennzeichnet durch einen pH-Wert zwischen 2,5 und 4,5 und dem Nichtgehalt an einer Puffersubstanz.

**Claims**

1. A water-soluble monoazo compound of the general formula (1)

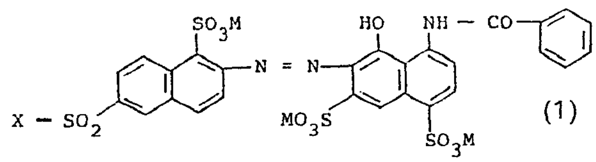

(1)

in which M is a hydrogen atom or an alkali metal atom or represents the equivalent of a metal of the Second or Third Main Group of the Periodical System, and X denotes the vinyl group or is a group of the general formula (2)

$$-CH_2-CH_2-Z \qquad (2)$$

in which Z is a substituent which can be eliminated under alkaline conditions.

2. A compound according to claim 1, characterized by that X is the vinyl group.

3. A compound according to claim 1, characterized by that X is a β-sulfatoethyl group.

4. A compound according to claim 1, 2 or 3, characterized by that M represents a hydrogen atom or an alkali metal atom.

5. A process for the preparation of the compounds of the general formula (1) mentioned and defined in claim 1, characterized by that a compound of the general formula (3)

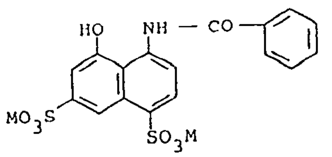

(3)

in which M has the above-mentioned meaning, is coupled with a diazotized amino compound of the general formula (4)

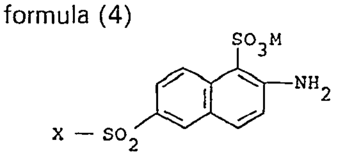

(4)

in which M and X have the above-mentioned meanings.

6. A process for the preparation of the compounds of the general formula (1), mentioned in claim 1, in which X is an ethyl group substituted in the β-position by an ester group, characterized by that a compound of the general formula (3) mentioned and defined in claim 5 is coupled with a diazotized amino compound of the general formula (4) mentioned and defined in claim 5, however, X representing the β-hydroxyethyl group, and the so obtained azo compound corresponding to the general formula (1) in which, however, X represents the β-hydroxyethyl group, is reacted with an esterification or acylation agent.

7. Use of the azo compounds of claim 1, or of the azo compounds prepared according to claim 5 or 6, as dyestuffs.

8. Use according to claim 7 for coloring materials, in particular fiber materials, containing hydroxy groups and/or carbonamide groups.

9. Use according to claim 8 for coloring cellulose fiber materials.

10. Aqueous, liquid compositions, characterized by the content of 5 to 45% of a compound of claim 1 and optionally of up to 5% by weight of a buffer substance.

11. Aqueous, liquid compositions of compounds of claim 1, characterized by a pH-value between 2.5 and 4.5 and the non-content of a buffer substance.

## Revendications

1. Composés monoazoïques hydrosolubles, de formule générale (1)

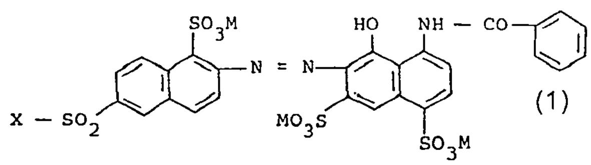

(1)

dans laquelle M est un atome d'hydrogène ou un atome de métal alcalin ou représente un équivalent d'un métal du groupe principal 2 ou 3, et X représente le groupe vinyle, ou un groupe de formule générale (2)

$$-CH_2-CH_2-Z \quad (2)$$

dans laquelle Z représente un substituant pouvant être éliminé en milieu alcalin.

2. Composés selon la revendication 1, caractérisés en ce que X représente le groupe vinyle.

3. Composés selon la revendication 1, caractérisés en ce que X représente un groupe β-sulfatoéthyle.

4. Composés selon la revendication 1, 2 ou 3, caractérisés en ce que M représente un atome d'hydrogène ou un atome de métal alcalin.

5. Procédé de préparation des composés de formule générale (1), cités et définis à la revendication 1, caractérisé en ce qu'on copule un composé de formule générale (3)

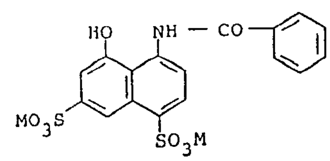

(3)

(dans laquelle M a le sens précité) avec une amine de formule générale (4)

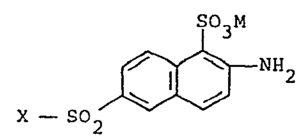

(4)

(dans laquelle M et X ont les sens précités), diazotée.

6. Procédé pour préparer les composés cités à la revendication 1, de formule générale (1), dans laquelle X représente un groupe éthyle substitué en position β par un groupe ester, procédé caractérisé en ce qu'on copule un composé de formule générale (3), citée et définie à la revendication 5, avec une amine, diazotée, de formule (4) citée à la revendication 5, mais dans laquelle X représente le groupe β-hydroxyéthyle, et l'on fait ensuite réagir avec un agent d'estérification ou d'acylation le composé azoïque ainsi obtenu, répondant à la formule générale (1), dans laquelle X représente cependant le groupe β-hydroxyéthyle.

7. Utilisation des composés azoïques de la revendication 1 ou des composés azoïques préparés selon la revendication 5 ou 6, comme colorants.

8. Utilisation selon la revendication 7 pour teindre des matières contenant des groupes hydroxyles et/ou carboxamides, en particulier des matières fibreuses.

9. Utilisation selon la revendication 8 pour teindre des matières en fibres de cellulose.

10. Préparations liquides aqueuses, caractérisées en ce qu'elles contiennent 5 à 45% d'un composé selon la revendication 1 et éventuellement jusqu'à 5% en poids d'une substance tampon.

11. Préparations liquides aqueuses de composés de la revendication 1, caractérisées en ce que leur pH se situe entre 2,5 et 4,5 et en ce qu'elles ne contiennent pas de substance tampon.